# EUROPEAN PATENT SPECIFICATION

(11) **EP 1 462 466 B1**
(45) Date of publication and mention of the grant of the patent: **27.07.2005**
(21) Application number: 01994847.0
(22) Date of filing: 31.12.2001
(51) Int. Cl.: C08F 220/56, C08F 2/32, B01F 17/00

(54) **METHOD OF PRODUCING REVERSE MICROEMULSIONS FROM CATIONIC COPOLYMERS**
VERFAHREN ZUR HERSTELLUNG VON UMGEKEHRTEN MIKROEMULSIONEN AUS KATIONISCHEN COPOLYMEREN
PROCEDE DE PRODUCTION DE MICRO-EMULSIONS INVERSES DE COPOLYMERES CATIONIQUES

(43) Date of publication of application: 29.09.2004
(73) Proprietor: Acideka, S.A., 48001 Bilbao (Vizcaya) (ES)
(72) Inventor: OCHOA GOMEZ, José Ramón, E-28760 Tres Cantos (ES); SASIA SANTOS, Pedro Manuel, E-48001 Bilbao (Vizcaya) (ES); DIAZ DE APODACA, Elena, E-01012 Vitoria (ES); GOMEZ ALIENDE, Nicomedes, E-48001 Bilbao (Vizcaya) (ES); VALLE CHAUSSON, Beatriz Fundacion Leia, C.D.T., E-01510 Minano (Alava) (ES); RIO PEREZ, Francisca Fundacion Leia, C.D.T., E-01510 Minano (Alava) (ES); ESCUDERO SANZ, Javier, E-40200 Cuéllar (Segovia) (ES)
(74) Representative: Portela Gasch, Sergio Raul
(86) International application number: PCT/ES2001/000513
(87) International publication number: WO 2003/062289

(56) References cited:
- EP-A- 0 299 817
- EP-A- 0 374 457
- EP-A- 0 529 206
- US-A- 4 581 402
- US-A- 4 672 090
- US-A- 5 376 713
- US-A- 6 130 303

## Description

### FIELD OF THE INVENTION

The invention is related to the obtainment of cationic copolymers of high molecular weight, obtained by polymerization into a inverse microemulsion in the presence of an self-inverting surfactant system in contact with an aqueous solution or suspension, capable of thermodynamically stabilizing the system, the copolymer being constituted of a nonionic monomer and a cationic monomer at a nonionic monomer to cationic monomer ratio comprised between 99:1 and 20:80 by weight.

### BACKGROUND OF THE INVENTION

The solution of many technological drawbacks related to the acceleration and increase of efficacy of solid-liquid system separation processes requires the use of synthetic products of a polymeric nature, which have, among others, two fundamental properties: high molecular weight, desirably above 3.10⁶ g/mol and an ionic (anionic or cationic) charge in their molecules and which are generically known as polyelectrolytes.

These separation processes acquire great importance in such currently essential activities such as water purification (as flocculating agents in physical-chemical treatments and as sludge dehydration agents), paper manufacture (as retention and drainage agents at the work table), or mining (as coadyuvants in solid separation processes).

The currently existing flocculants are either marketed in a solid phase or in inverse emulsion. In the first case, their use requires the prior dissolution of the polymer, which is very cumbersome due to the slowness with which this occurs, as well as the need to have to prepare daily said solution. The marketing of the inverse emulsion flocculant decreases the time necessary for preparing the solution, but the emulsions have the drawbacks that they cannot be metered directly into the effluent to be treated nor are they thermodynamically stable, so that they therefore separate into the constituent phases. Accordingly, metering of the flocculant requires a prior emulsion homogenization step in the place in which it is going to be used. Furthermore, the process of polymerization into inverse emulsion implies the prior formation of the latter, which requires providing a high amount of mechanical power.

The previously mentioned drawbacks can be ignored by obtaining the flocculant directly in inverse microemulsion. Inverse microemulsions are thermodynamically stable and transparent or translucent water-in-oil systems, stabilized by surfactants.

The polymerization of soluble monomers into microemulsions was developed in the 1980s, acrylamide being the first monomer researched (F. Candau, *Polymerization in Organized Media*, C.M. Paelos (ed.), Gordon and Breach, Philadelphia, 1992, pp. 215-282). The polymerization of water-soluble monomers into a inverse microemulsion permits obtaining thermodynamically stable microemulsions with a particle size of less than 150 nm. The fact that the formation of the microemulsion does not require a large contribution of mechanical power (it can be carried out on a laboratory scale, for example, by manually stirring the aqueous and oily phase mixture) together with its thermodynamic stability permits ignoring the aforementioned drawbacks related to the obtainment of water-soluble polymers for use as flocculants by polymerization into inverse emulsion.

Since 1980, studies related to the obtainment of water-soluble polymers by inverse polymerization have been numerous. See, for example, US patent number 4,521,317, to Candau et al.; US patent number 4,681,912, to Durand et al.; the Holtzscherer et al. study "*Application of the Cohesive Energy Ratio Concept (CER) to the Formation of Polymerizable Microemulsions", Colloids and Surfaces*, 29 (1998); US patent number 4,954,538, to Dauplaise et al.; European patent EP 462 365, to Honig et al.; Chapter 21 *"Inverse Emulsion and Microemulsion Polymerization",* by F. Candau, from the book *Emulsion Polymerization and Emulsion Polymers,* P.A. Lowell and M.S. El-Aasse eds., John Wiley & Sons Ltd, 1997; US patent numbers 5,380,444, 5,512,184, 5,650,465 and 6,037,406, to M.S. Ryan et al.; US patent number 5,696,228, to M. Coville et al.; US patent number 5,670,615, to S.Y. Huang et al; US patent number 6,130,303, to R.E. Neff et al.; US patent number 6,060,164, to M. Green et al., and US patent number 5,171,782, to F. Candau et al. European patent application EP 374 457 discloses a general process for producing an inverse microemulsion of cationic polymers by using a surfactant system having a HLB between 8-12 although it illustrates the use of only one nonionic surfactant comprising an oleate derived chain.

All these patents and publications disclose processes for obtaining water-soluble polymers by polymerization into inverse microemulsion, in one or two steps, in the presence of a surfactant system. In all of them, surfactants and surfactant mixtures which can be used for achieving the desired purpose are mentioned, as well as the necessary optimal hydrophilic - lipophilic balance (HLB) interval.

However, none of said patents or publications focuses on the fact that the key to obtaining a stable inverse microemulsion is based on the chemical features of the surfactant system. In fact, the almost universally used surfactant system is constituted of the mixture of sorbitol hexaoleate with HLB 10.2 (Atlas G1086, of ICI) and sorbitan sesquioleate with HLB 3.7 (Arlacel 83, of ICI). Although other surfactants are mentioned as an example, it is not clearly shown, as is done so by the inventors of the present invention, that not all surfactants or surfactant systems permit obtaining stable inverse microemulsions after polymerization. Furthermore, nor does any surfactant or surfactant system bring together the features of providing auto-reversibility and thermal stability to the polymer microemulsions, as do the surfactants or surfactant systems of the present invention.

The previous studies have been focused on determining the optimal HLB interval for obtaining a stable inverse microemulsion before and after polymerization, and not on the chemical features of the surfactants used for achieving said optimal HLB interval. A special focus was made in the study of the influence of this the HLB, as is shown, for example, in the previously mentioned Holtzscherer et al. study "*Application of the Cohesive Energy Ratio Concept (CER) to the Formation of Polymerizable Microemulsions", Colloids and Surfaces,* 29 (1998), which examines the influence of the nature of the oil forming the continuous phase and of the presence of electrolytes in the aqueous phase, in the formation of inverse microemulsions, but not of the chemical structure of the surfactant or surfactants constituting the surfactant system. From such studies, the conclusion has been made that in order to obtain a stable microemulsion, it is necessary for the HLB to be comprised between 8 and 10 and that in order to stabilize it, the suitable surfactants are those in which the hydrophobic chain length is similar to that of the oil forming the microemulsion continuous phase. On the other hand, the larger the interfacial area between the phases forming the microemulsion, the greater its stability will be, which suggests the use of surfactants whose hydrophobic portion is very large. However, as will be shown by means of this invention, these particularities are not enough for obtaining a stable microemulsion after polymerization of the comonomers.

It is therefore an object of this invention to develop a process for obtaining inverse microemulsions of copolymers formed by water-soluble nonionic and cationic monomers by means of the use of a surfactant system with an HLB comprised between 8 and 10, comprising one or more nonionic surfactants, in which at least one of said nonionic surfactants has a hydrophobic chain with a number of carbon atoms equal to or greater than 18, and, at least, one double bond.

A desirable feature of a inverse microemulsion for use as a flocculant is that it auto-inverses in contact with the aqueous solution or suspension in which it must accelerate the sedimentation of the solids in suspension. As used in this description, "auto-inversion" means that when the microemulsion comes into contact with an aqueous solution or suspension (for example, waste water), a direct emulsion, in other words of oil-in-water, is formed without needing to add a inverting surfactant with a high HLB, such that the flocculating polymer of the microemulsion dissolves in said aqueous solution or suspension and gives way to the formation of floccules. This can be achieved by means of the same method used in the emulsion technology for transforming a inverse emulsion into an activated inverse emulsion, in other words, self-inverting(see, for example, "*Study of inverting surfactants for inverse polyacrylamide emulsions",* I. Aksman and W. MacNamee, 3^{rd} Cesio International Surfactants Congress, London, 1-5 of June, 1992), a process which consists of adding to the inverse emulsion obtained after the polymerization, a certain amount of a surfactant or a mixture of surfactants with a high HLB, typically higher than 12. However, this method is complex and requires an additional processing phase.

It is well known by persons skilled in the art that the stability of a microemulsion depends, among other factors, on the temperature. Therefore, it is desirable for a cationic copolymer microemulsion, useful as a flocculant, to maintain its stability and capacity to be pumped (necessary for facilitating its metering by conventional means such as, for example, by pumps) in a broad temperature interval corresponding to the temperatures existing in winter and summer in different geographical locations, typically between 0°C and 40°C. As is well known by persons skilled in the art, such an effect can be achieved by means of adding a fluidizer and/or an anti-freeze, such as polyethylene glycol. However, this implies the addition of a new component, which is undesirable from the economic point of view.

It is therefore a further object of this invention to develop a process for obtaining inverse microemulsions of cationic copolymers formed by nonionic and cationic monomers, of high molecular weight and high solid content, useful, among other applications, as flocculants, such that the obtained microemulsion does not separate into phases and can be pumped in the temperature interval comprised between 0°C and 40°C, typical interval in which the product storage facilities are located in winter and summer, without needing to add a fluidizing or anti-freeze agent.

### DETAILED DESCRIPTION OF THE INVENTION

The present invention refers to cationic copolymers of high molecular weight, desirably above 3.10⁶ g/mol, obtained by polymerization into a inverse microemulsion in the presence of an self-inverting surfactant system in contact with an aqueous solution or suspension, capable of thermodynamically stabilizing the microemulsion, the copolymer being constituted of a nonionic monomer and of a cationic monomer, at a nonionic monomer to cationic monomer ratio comprised between 99:1 and 20:80 by weight.

In a particular embodiment, said nonionic monomer is a vinyl monomer, such as acrylamide. Likewise, in a particular embodiment, said cationic monomer is a quaternary ammonium derivative, for example, diallyldimethylammonium chloride, methacryloxyethyldimethylammonium chloride, (meth)acrylamidopropyltrimethylammonium or acryloxyethyltrimethylammonium chloride (Q9), preferably Q9.

The invention also refers to a process for obtaining inverse microemulsions of a cationic copolymer constituted of a nonionic monomer and a cationic monomer, of high molecular weight, comprising the following steps:
a) preparing an aqueous phase, said aqueous phase comprising:
   a.1) water;
   a.2) a mixture of the monomers to be copolymerized comprising, at least, one nonionic monomer and one cationic monomer, at a total monomer concentration comprised between 20% and 45% by weight with regard to the total weight of the microemulsion, and at a nonionic monomer to cationic monomer ratio comprised between 99:1 and 20:80 by weight;
   a.3) optionally, a metal chelating agent; and
   a.4) optionally, a polymerization initiator;
   by means of the mixture of components a.1), a.2) and, optionally, a.3) and/or a.4);
b) separately preparing an oily or organic phase, said oily phase comprising:
   b.1) an organic solvent; and
   b.1) a surfactant system whose HLB is comprised between 8.8 and 9.5, comprising at least two nonionic surfactants, (i) at least a nonionic surfactant "A" which has an HLB comprised between 3 and 8 and has at least one hydrophobic chain with at least one insaturation and a number of carbon atoms equal to or greater than 18, and (ii) at least a nonionic surfactant "B" which has an HLB higher than 12 and comprising one or more saturated hydrophobic chains with a number of carbon atoms comprised between 8 and 18; by means of the mixture of components b.1) and b.2);
c) degasifying said aqueous and oily phases, together or separately, with an inert gas until the oxygen concentration in the phases is lower than 0.5 ppm;
d) mixing said aqueous and oily phases in inert atmosphere in case they have been degasified separately; and
e) polymerizing said aqueous and oily phase mixture in inert atmosphere.

The formation of an inverse microemulsion depends on the suitable choice of the surfactant system, on its concentration and HLB, as well as on the temperature, nature of the oily phase and composition of the aqueous phase.

Contrary to what is deduced from the prior state of the art, not just any surfactant system is suitable for obtaining stable polymeric microemulsions, although the microemulsions formed by the monomers before polymerizing are. The inventors of the present invention have surprisingly shown that in addition to the HLB of the surfactant system being comprised between 8 and 10, as indicated in the state of the art, the surfactant system proposed by this invention which allows obtaining stable microemulsions of cationic copolymers (hereinafter, occasionally identified as surfactant system of the invention), must contain, at least, one or more nonionic surfactants, of which, at least, one of said nonionic surfactants has, at least, one hydrophobic chain with a number of carbon atoms equal to or greater than 18, and, at least, one double bond.

Generally, the surfactant system HLB suitable for forming a inverse microemulsion of the present invention before polymerization should be comprised between 8 and 11, preferably between 8 and 10.5. However, for the microemulsion to remain stable after polymerization, it is necessary for the HLB to be comprised between 8 and 10, preferably between 8.8 and 9.5. Values higher than 9.5 cause irreversible destabilization of the microemulsion during the polymerization such that the copolymers object of the present invention are not obtained in microemulsion, but rather forming an unmanageable mass is obtained. Values below 8.8 make the auto-inversion of the microemulsion difficult when, in order to act as a flocculant, it is put in contact with an aqueous solution or suspension, for example urban or industrial waste waters.

Said HLB values can be obtained by using a single nonionic surfactant or a mixture of surfactants. However, it is preferable to use a mixture of two or more surfactants such that the HLB of at least one of them is comprised between 3 and 8, whereas the HLB of at least another one of them is comprised between 10 and 16, preferably between 12 and 15.

The concentration of the surfactant system of the invention must be high enough so as to stabilize the microemulsion obtained after polymerization. The concentration of the surfactant system of the invention will be comprised between 5% and 15% by weight, preferably between 5% and 8% by weight, with regard to the total weight of the microemulsion. Lower values do not permit obtaining microemulsions, whereas higher values provide no technical advantage.

The chemical features of the surfactant or surfactants constituents of the surfactant system of the invention are critical for the purposes of the present invention. Generally, the surfactant system of the invention comprises, at least, one nonionic surfactant containing at least one hydrophobic chain containing 18 or more carbon atoms, and, at least, one double bond, and which has an HLB comprised between 3 and 8 (occasionally these surfactants are identified in this description as nonionic surfactants "A"). In case the nonionic surfactant "A" has more than one hydrophobic chain, these chains could be equal or different, normally equal. Among those preferred nonionic surfactants "A", the following could be mentioned as an illustrative and non-limiting example: sorbitol and sorbitan esters, such as polyethoxylated sorbitol hexaoleate, polyethoxylated sorbitan trioleate, polyethoxylated sorbitan sesquioleate, polyethoxylated sorbitol monooleate and sorbitan monooleate; polyethylene glycol esters, such as polyethylene glycol monooleate and dioleate; ethoxylated fatty alcohols, such as polyethoxylated oleic and ricinoleic alcohol; polyethoxylated xylitol esters, such as polyethoxylated xylitol pentaoleate; polyethoxylated glycerin esters, such as polyethoxylated glycerin trioleate; and polyethoxylated trimethylolpropane esters, such as polyethoxylated trimethylolpropane trioleate.

For the purpose of achieving that the microemulsion auto-inverses in contact with an aqueous solution or suspension and that it is stable in a broad temperature interval, particularly between 0°C and 40°C, the surfactant system of the invention, whose HLB must be comprised between 8.8 and 9.5, comprises, in addition to one or more nonionic surfactants "A", at least one or more nonionic surfactants (nonionic surfactant "B") whose hydrophobic chains are saturated and contain between 8 and 18 carbon atoms, preferably between 8 and 14 carbon atoms, and has an HLB higher than 12, preferably higher than 13 and lower than 16. Said nonionic surfactant or surfactants "B" can be used in an amount comprised between 45% and 65% by weight, preferably between 55% and 65% by weight, with regard to the total weight of the surfactant system, and they can be chosen, as an illustrative and non-limiting example, from the group formed by the following surfactants: sorbitol and sorbitan esters, such as polyethoxylated sorbitan monostearate and monoisostearate, polyethoxylated sorbitol hexalaurate and polyethoxylated sorbitan hexalaurate; polyethylene glycol esters, such as polyethylene glycol dilaurate, polyethylene glycol monostearate and distearate; ethoxylated fatty alcohols, such as polyethoxylated stearyl alcohol, polyethoxylated cetyl alcohol, polyethoxylated cetostearyl alcohol; alcohols with 10 to 14 linear or branched, primary or secondary saturated polyethoxylated carbon atoms (C10-C14); polyethoxylated xylitol esters, such as polyethoxylated xylitol pentastearate and pentaoleate; polyethoxylated glycerin esters, such as polyethoxylated glycerin trilaurate; and polyethoxylated trimethylolpropane esters, such as polyethoxylated trimethylolpropane tristearate or trilaurate. With no intention of trying to be linked to another theory, it is believed that the long hydrophilic chain of the nonionic surfactants preferably constituted of ethoxy groups behaves as an anti-freeze, preventing the separation of phases or the thickening of the microemulsion to the point of prevent its use as a carrier.

The oily phase of the microemulsion is formed by the surfactant system and an organic solvent. The choice of the organic solvent of the microemulsion significantly influences the minimum surfactant system amount necessary for stabilizing it and the optimal HLB for forming it. This solvent can be an aliphatic or aromatic hydrocarbon or a mixture of aromatic and/or aliphatic hydrocarbons. The number of carbon atoms of each hydrocarbon can be comprised between 6 and 18, preferably between 10 and 14.

The aqueous phase of the microemulsion is composed of water, the monomers to be polymerized, and, optionally, (i) an additive necessary for preventing the inactivation of the polymerization due to the presence of metals, such as a chelating agent, for example EDTA (ethylenediaminetetraacetic acid) and/or NTA (nitrilotriacetic acid) or a salt thereof, and (ii) a polymerization initiator or a component of the redox pair polymerization initiator. In case the polymerization initiation is carried out by means of a redox pair, the aqueous phase will preferably comprise the oxidizing agent.

The monomers present in the aqueous phase include, at least, one nonionic monomer, such as acrylamide, and, at least, one cationic monomer, such as a quaternary ammonium derivative, for example, diallyldimethylammonium chloride, methacryloxyethyldimethylammonium chloride, acrylamidopropyltrimethylammonium chloride or Q9, preferably, Q9.

The total monomer concentration with regard to the total weight of the microemulsion is comprised between 20 and 45% by weight, preferably between 30% and 40% by weight.

The nonionic monomer to cationic monomer ratio is comprised between 99:1 and 20:80 by weight, and its exact selection depends on the final application of the microemulsion.

The aqueous phase pH is comprised between 3 and 6, preferably between 3 and 5.4.

The oily phase to aqueous phase ratio is such that the total active substance (cationic copolymer) concentration of the microemulsion, once polymerization is carried out, is comprised between 20% and 45% by weight, preferably between 30% and 40% by weight, with regard to the total weight of the microemulsion.

The polymerization of the monomers is carried out by free radicals until the conversion of the monomers is equal to or greater than 60%, preferably, equal to or greater than 80%, more preferably, equal to or greater than 95%, and significantly preferably, 100%.

Polymerization initiation can be carried out at a temperature comprised between 15°C and 40°C, preferably between 30°C and 40°C. If polymerization is carried out discontinuously in a single step, the heat released during the course of polymerization is such that, taking into account the high polymerization rate, it is practically impossible to keep the temperature constant. The latter will increase, normally between 9°C and 25°C, without the flocculant properties of the obtained product significantly deteriorating.

For putting the present invention into practice, a wide variety of free radical polymerization initiators, thermal as well as redox pair initiators, can be used. Among those thermal initiators, it is worth mentioning 2,2'-azobisisobutyronitrile (AIBN), 2,2'-azobis(2-aminopropane) dihydrochloride (V-50), peroxides, such as tert-butyl peroxide, and inorganic compounds, such as sodium, potassium and ammonium persulfate.

In case of using a thermal initiator, it can either be added initially to the aqueous phase or subsequently to the final microemulsion after degasifying. In the first case, it is necessary to carry out the degasification at a temperature comprised between 20°C and 30°C. In case the polymerization initiation is carried out using a redox pair, the redox pairs which can be used as initiators are ammonium ferrous sulfate/ammonium persulfate and sodium disulfite/ammonium persulfate, and the aqueous phase will comprise, preferably, the redox pair oxidizing agent. In case of using sodium disulfite (Na₂S₂O₅) as a reducer agent, it is not necessary to use an oxidizing agent since the polymerization can be carried out using only sodium disulfite as an initiator. Therefore, in a preferred embodiment, polymerization is initiated by means of the exclusive use of sodium disulfite as an initiator, adding it continuously and in aqueous solution form to the deoxygenated microemulsion at a certain temperature.

Where applicable, the concentration of the reducer agent present in the aqueous solution to be added to the deoxygenated microemulsion is comprised between 0.1 g/l and 400 g/l, preferably between 0.1 g/l and 5 g/l, and more preferably between 0.1 g/ and 1 g/l, and the pH of this solution can be comprised between 2 and the pH corresponding to the concentration of sodium disulfite used. It can be adjusted with any inorganic acid, preferably with HCl.

The addition flow rate of the reducer agent solution depends on the reducer agent concentration therein. Thus, for example, for the preferred concentration range (0.1-1 g/l), the flow rate can range between 5 and 200 ml/h/kg of aqueous phase, preferably between 10 and 150 ml/h/kg of aqueous phase.

The polymerization reaction into inverse microemulsion can be carried out discontinuously (in a single step or in several sequential addition steps) as well as continuously and semi-continuously. However, the preferred operation mode is the discontinuous mode in a single load which, preferably, comprises the following steps:
a) preparing an aqueous phase, said aqueous phase comprising:
   a.1) water;
   a.2) a mixture of, at least, one nonionic monomer and one cationic monomer, at a total monomer concentration comprised between 20% and 45% by weight with regard to the total weight of the microemulsion, and at a nonionic monomer to cationic monomer ratio comprised between 99:1 and 20:80 by weight; and
   a.3) optionally, a metal chelating agent, such as EDTA; and
   a.4) optionally, an oxidizing agent component of a redox pair free radical polymerization initiator, such as ammonium or potassium persulfate;
   by means of the mixture of components a.1), a.2), and, optionally, a.3) and/or a.4);
b) separately preparing an oily phase, said oily phase comprising:
   b.1) an organic solvent; and
   b.2) a surfactant system whose HLB is comprised between 8.8 and 9.5, comprising at least two nonionic surfactants, (i) at least a nonionic surfactant "A" which has an HLB comprised between 3 and 8 and has at least one hydrophobic chain with at least one insaturation and a number of carbon atoms equal to or greater than 18, and (ii) at least a nonionic surfactant "B" which has an HLB higher than 12 and comprising one or more saturated hydrophobic chains with a number of carbon atoms comprised between 8 and 18; by means of the mixture of components b.1) and b.2);
c) degasifying said aqueous and oily phases, together or separately, with an inert gas until the oxygen concentration therein is lower than 0.5 ppm;
d) mixing said aqueous and oily phases in inert atmosphere in case they have been degasified separately; and
e) polymerizing said aqueous and oily phase mixture in inert atmosphere by means of adding sodium disulfite in case said aqueous phase did not contain said oxidizing agent component of a redox pair free radical polymerization initiator (a.4), at a temperature comprised between 15°C and 40°C, preferably between 30°C and 40°C; or alternately
e') polymerizing said aqueous and oily phase mixture in inert atmosphere by adding a reducer agent capable of reducing said oxidizing agent component of a redox pair free radical polymerization initiator (a.4) present in said aqueous phase, at a temperature comprised between 15°C and 40°C, preferably between 30°C and 40°C

The cationic copolymer microemulsions obtained according to the process for the present invention have different applications. One of the main applications is their use as flocculants, which have significant advantages in comparison with the currently marketed solid state or emulsion flocculants. Among said advantages, the following can be mentioned:
- higher yield;
- stability in the typical application temperature interval;
- easy to meter by means of conventional metering devices; and
- auto-inversion capacity in contact with an aqueous solution or suspension.

The cationic copolymer microemulsions obtained in examples 25 and 26 were evaluated as sludge dehydration agents and compared with a commercial emulsion, clearly showing its higher yield, together with the aforementioned advantages of these microemulsions.

The following examples illustrate the invention and should not be considered in a limiting sense, but rather in an illustrative sense of the invention.

### Example 1

In a 300 ml lined reactor provided with an anchor-type stirrer, an aqueous phase was prepared which consisted of 36 g of a 50% by weight acrylamide aqueous solution, 33.75 g of 80% by weight commercial grade Q9 in water, 20.25 g of deionized water and 0.15 g of ethylenediaminetetraacetic acid disodium salt. The monomer content was 50% by weight and the cationic charge was 60%. The pH of the solution was 4.68.

An oily phase was prepared in another deposit adding 15 g of a surfactant system with HLB 9.5, formed by 9.063 g of a polyethoxylated linear secondary fatty alcohol with HLB 13.3 with an average number of 13 carbon atoms in its hydrophobic chain, and 5.937 g of a sorbitan sesquioleate with HLB 3.7, to 45 g of a paraffin oil formed by a mixture of n-decane and tetradecane at a 40:60 ratio.

Both phases were mixed together, and a inverse monomer microemulsion was obtained with an active substance concentration of 30% by weight with regard to the total weight of the microemulsion and a surfactant system concentration of 10% by weight with regard to the total weight of the microemulsion.

The microemulsion was deoxygenated by bubbling nitrogen for 15 minutes at the same time its temperature was adjusted to 35°C recirculating water at 37°C through the reactor liner.

Polymerization was initiated by adding a sodium disulfite aqueous solution (5 g/l) at a specific flow rate of 66.67 ml/h/kg of aqueous phase. The polymerization occurred with no abrupt viscosity variations, going from a turbid to transparent and again turbid appearance. The temperature slowly increased to 64°C in 3 minutes and subsequently decreased to 35°C in 12.5 minutes. Polymerization was considered concluded at that time.

A cationic copolymer microemulsion was obtained that was translucent, able to be pumped and stable, as was proven by the fact that it did not separate into phases after centrifuging at 5000 rpm for 2 hours. The microemulsion maintained its stability and ability to be pumped at 0°C and at 40°C. The microemulsion was self-invertingas was proven by following the viscosity of a stirred mixture formed by 4.5 g of microemulsion and 250 ml of water in comparison with a mixture of 4.5 g of microemulsion and 250 ml of an aqueous solution of a inverting surfactant (4 g/l) with HLB 13.3. Both mixtures reached the same viscosity in less than 5 minutes, the oil from the microemulsion in the aqueous solution forming a milky emulsion with no floccules, the presence of floccules being indicative that the inversion was not good.

### Examples 2 and 3

The process of Example 1 was repeated, but at a polymerization initiation temperature of 25°C (Example 2) and 40°C (Example 3). Translucent, stable and self-inverting cationic copolymer microemulsions were obtained.

The yields of the microemulsions of Examples 1 to 3 as sludge dehydration agents were evaluated using the CST (Capillary Suction Time) method. The sludge used was from the sludge digestion of an urban waste water purifier station. The obtained results indicated the relative order of efficacy was: Example 1 ≥ Example 2 >> Example 3. Therefore, the optimal polymerization temperature was set at 35°C.

### Examples 4 to 9

The process of example 1 was repeated, but with a surfactant system formed by a mixture of a polyethoxylated linear secondary fatty alcohol with HLB 13.3 with an average number of 13 carbon atoms in its hydrophobic chain and a fatty alcohol of the same type with HLB 7 (Example 4). Example 5 was carried out as example 4, but with a surfactant system concentration equal to 15% by weight with regard to the total weight of the microemulsion. Examples 6 and 7 were carried out under the same conditions as Example 4, but at HLB 9 with a surfactant system concentration of 10% (Example 6) and 15% (Example 7). Examples 8 and 9 were carried out in the same conditions as Examples 6 and 7, but at a polymerization initiation temperature of 30°C. In all cases, the separation of phases occurred during polymerization, generating a completely unmanageable polymeric mass.

The comparison of Examples 1 to 3 with Examples 4 to 9 clearly shows that it is not possible to obtain stable cationic copolymer microemulsions with just any type of surfactant system.

### Examples 10 to 13

The process of example 1 was repeated, but with variable HLBs equal to 10 (Example 10), 9.75 (Example 11), 9.25 (Example 12) and 9 (Example 13). The cationic copolymer microemulsions of Examples 12 and 13 were stable, whereas those of Examples 10 and 11 separated into phases. The yields of the microemulsions of Examples 12 and 13 as sludge dehydration agents were evaluated and compared to the microemulsion of Example 1, using the same method and sludge as in Examples 2 and 3. The obtained results indicated that the relative order of efficacy was: Example 1 = Example 12 ≈ Example 13. Therefore, it is deduced of Examples 1 and 10-13 that, on one hand, to obtain stable cationic copolymer microemulsions, the HLB of the surfactant system must be lower than or equal to 9.5 and, on the other hand, that the HLB does not influence the yield of these microemulsions as sludge dehydration agents.

### Examples 14 to 16

The process of example 1 was repeated, but the pH of the aqueous phase was varied. Thus, in Example 14, the pH equal to 6.84 was obtained directly by substituting the EDTA disodium salt in the aqueous phase with tetrasodium salt; in Example 15, the pH of 5.6 was adjusted with NaOH; and in Example 16, the pH of 3.05 was adjusted with HCl. The cationic copolymer microemulsion of Example 14 separated into phases, whereas the microemulsions of Examples 15 and 16 were stable. The increase of pH slows the polymerization rate, which allows better control of the polymerization temperature. The yields of the microemulsions of Examples 12 and 13 as sludge dehydration agents were evaluated and compared to the microemulsion of Example 1, using the same method and sludge as in Examples 2 and 3. The obtained results indicated that, for the concentration of sodium disulfite used in the initiator solution, the yield slightly increases when the pH increases.

### Example 17

In a 300 ml lined reactor provided with an anchor-type stirrer, an aqueous phase was prepared which consisted of 39 g of a 50% by weight acrylamide aqueous solution, 36.562 g of 80% by weight commercial grade Q9 in water, 21.937 g of deionized water and 0.16 g of ethylenediaminetetraacetic acid disodium salt. The monomer content was 50% by weight and the cationic charge was 60%. The pH of the solution was adjusted to 5.35 with drops of a 20% by weight NaOH aqueous solution.

An oily phase was prepared in another deposit adding 15 g of a surfactant system with HLB 9.4, formed by 8.9 g of a polyethoxylated linear secondary fatty alcohol with HLB 13.3 with an average number of 13 carbon atoms in its hydrophobic chain, and 6.1 g of a sorbitan sesquioleate with HLB 3.7, to 37.5 g of a paraffin oil formed by a mixture of n-decane and tetradecane at a 40:60 ratio.

Both phases were mixed together to give a inverse monomer microemulsion with an active substance concentration of 32.5% by weight with regard to the total weight of the microemulsion (65% aqueous phase), and a surfactant system concentration of 10% by weight with regard to the total weight of the microemulsion.

The microemulsion was deoxygenated by bubbling nitrogen for 15 minutes at the same time its temperature was adjusted to 35°C recirculating water at 37°C through the reactor liner.

Polymerization was initiated by adding a sodium disulfite aqueous solution (5 g/l) at a specific flow rate of 66.67 ml/h/kg of aqueous phase. The polymerization occurred with no abrupt viscosity variations, going from a turbid to transparent and again turbid appearance. The temperature slowly increased to 50.9°C in 12 minutes and subsequently decreased to 35°C in 8 minutes. Polymerization was considered concluded at that time.

A cationic copolymer microemulsion was obtained that was translucent, able to be pumped and stable, as was proven by the fact that it did not separate into phases after centrifuging at 5000 rpm for 2 hours. The microemulsion maintained its stability and ability to be pumped at 0°C and at 40°C. The microemulsion was self-invertingas was proven by following the viscosity of a stirred mixture formed by 4.5 g of microemulsion and 250 ml of water in comparison with a mixture of 4.5 g of microemulsion and 250 ml of an aqueous solution of a inverting surfactant (4 g/l) with HLB 13.3. Both mixtures reached the same viscosities in less than 5 minutes, the oil from the microemulsion in the aqueous solution forming a milky emulsion with no floccules.

### Examples 18 to 21

The process of Example 17 was repeated, but the concentration of the sodium disulfite aqueous solution was varied: 4 g/l (Example 18), 3 g/l (Example 19), 2.5 g/l (Example 20) and 2 g/l (Example 21). The maximum temperatures were, respectively, 51.2°C, 51.0°C, 45.1°C and 44.2°C. In all cases, the conversion of monomers was higher than 97%, except in Example 21, which was 90%.

The cationic copolymer microemulsions of Examples 17 to 21 were evaluated as sludge dehydration agents, determining the yields by using the same sludge and method as in Examples 2 and 3, and they were compared to the commercial cationic emulsion Superfloc C-1596 by Cytec Technology Corp., Wilmington, DE. The microemulsions of Examples 17 to 21 were less efficient.

### Example 22

The process of Example 17 was repeated, except that the concentration of the surfactant system was 7%, the concentration of oil was 28%, both by weight with regard to the total weight of the microemulsion, and the concentration of the sodium disulfite aqueous solution was 3 g/l. The maximum polymerization temperature was 47.8°C, and the duration of polymerization was 25 minutes.

A cationic copolymer microemulsion was obtained that was stable, transparent, able to be used as a carrier and self-invertingin contact with an aqueous suspension or solution.

### Example 23

The process of Example 17 was repeated, except that the concentration of the aqueous phase with regard to the total microemulsion was 70% (35% monomer concentration with regard to the total microemulsion), the surfactant system concentration was 7% and the oil concentration was 23%, both by weight with regard to the total weight of the microemulsion, and the sodium disulfite aqueous solution concentration was 3 g/l. The maximum polymerization temperature was 44.4°C and the duration of polymerization was 30 minutes.

A cationic copolymer microemulsion was obtained that was stable, transparent, able to be pumped and self-invertingin contact with an aqueous suspension or solution.

### Example 24

In a 750 ml lined reactor provided with an anchor-type stirrer, an aqueous phase was prepared which consisted of 120.3 g of a 50% by weight acrylamide aqueous solution, 128.3 g of 80% by weight commercial grade Q9 in water and 0.54 g of ethylenediaminetetraacetic acid disodium salt. The monomer content was 65.34% by weight and the cationic charge was 63%. The pH of the solution was adjusted to 5.0.

An oily phase was prepared in another deposit adding 36.4 g of a surfactant system with HLB 8.0, formed by 16.6 g of a polyethoxylated linear secondary fatty alcohol with HLB 13.3 with an average number of 13 carbon atoms in its hydrophobic chain, and 19.8 g of a sorbitan sesquioleate with HLB 3.7, to 107.2 g of a paraffin oil formed by a mixture of n-decane and tetradecane at a 40:60 ratio.

Both phases were mixed together and a inverse monomer microemulsion was obtained with an active substance concentration of 41.1% by weight with regard to the total weight of the microemulsion (62.93% aqueous phase), and a surfactant system concentration of 9.19% by weight with regard to the total weight of the microemulsion.

The microemulsion was deoxygenated by bubbling nitrogen for 20 minutes at the same time its temperature was adjusted to 35°C recirculating water at 37°C through the reactor liner.

Polymerization was initiated by adding a sodium disulfite aqueous solution (5 g/l) at a specific flow rate of 66.67 ml/h/kg of aqueous phase. The polymerization occurred with no abrupt viscosity variations, going from a turbid to transparent and again turbid appearance. The temperature slowly increased to 76.5°C in 2 minutes and subsequently decreased to 35°C in 8 minutes. Polymerization was considered concluded at that time.

A cationic copolymer microemulsion was obtained that was translucent, able to be pumped and stable, as was proven by the fact that it did not separate into phases after centrifuging at 5000 rpm for 2 hours. The microemulsion maintained its stability and ability to be pumped at 0°C and at 40°C. The microemulsion was not self-inverting due to its low HLB.

The cationic copolymer microemulsions of Examples 22 to 24 were evaluated as sludge dehydration agents, determining the yields using the same sludge and method as in Examples 2 and 3, and they were compared to the commercial cationic emulsion Superfloc C-1596 by Cytec Technology Corp., Wilmington, DE. The optimal dose of the microemulsion of Example 24 was 19 ppm, whereas those of Examples 22 and 23, and that of the commercial cationic emulsion Superfloc C-1596 were 22 ppm. The microemulsions of Examples 22 and 23 therefore had a yield identical to that of the commercial emulsion but without the drawbacks of the latter mentioned previously in this specification. The microemulsion of Example 24 had a higher yield than that of the commercial emulsion.

### Example 25

In a 300 ml lined reactor provided with an anchor-type stirrer, an aqueous phase was prepared which consisted of: 43.8 g of a 50% by weight acrylamide aqueous solution, 41.06 g of 80% by weight commercial grade Q9 in water, 24.63 g of deionized water and 0.15 g of ethylenediaminetetraacetic acid disodium salt. The monomer content was 50% by weight and the cationic charge was 60%. The pH of the solution was 3.1 with 35% by weight of HCl.

An oily phase was prepared in another deposit adding 6 g of a surfactant system with HLB 9.2, formed by 3.44 g of a polyethoxylated linear secondary fatty alcohol with HLB 13.3 with an average number of 13 carbon atoms in its hydrophobic chain, and 2.56 g of a sorbitan sesquioleate with HLB 3.7, to 34.5 g of a paraffin oil formed by a mixture of n-decane and tetradecane at a 40:60 ratio.

Both phases were mixed together to give a inverse monomer microemulsion with an active substance concentration of 36.5% by weight with regard to the total weight of the microemulsion and a surfactant system concentration of 4% by weight with regard to the total weight of the microemulsion.

The microemulsion was deoxygenated by bubbling nitrogen for 15 minutes at the same time its temperature was adjusted to 35°C recirculating water at 37°C through the reactor liner.

Polymerization was initiated by adding a sodium disulfite aqueous solution (0.1 g/l), adjusted to pH 3 with 35% by weight HCl, at a specific flow rate of 66.67 ml/h/kg of aqueous phase. The polymerization occurred with no abrupt viscosity variations, going from a turbid to transparent and again turbid appearance. The temperature slowly increased to 50.6°C in 13 minutes and subsequently decreased to 35°C in 13.5 minutes. Polymerization was considered concluded at that time.

A cationic copolymer microemulsion was obtained that was translucent, able to be pumped and stable, as was proven by the fact that it did not separate into phases after centrifuging at 5000 rpm for 2 hours. The microemulsion maintained its stability and ability to be used pumped at 0°C and at 40°C. The microemulsion was self-inverting as was proven by following the viscosity of a stirred mixture formed by 4.5 g of microemulsion and 250 ml of water in comparison with a mixture of 4.5 g of microemulsion and 250 ml of an aqueous solution of a inverting surfactant (4 g/l) with HLB 13.3. Both mixtures reached the same viscosities in less than 5 minutes, the oil from the microemulsion in the aqueous solution forming a milky emulsion with no floccules, the presence of floccules being indicative that the inversion is not good.

### Example 26

The process of Example 25 was repeated, but the pH of the sodium disulfite solution was adjusted to 2.05. The temperature slowly increased to 45.3°C in 12.5 minutes and subsequently decreased to 35°C in 12 minutes. The polymerization was considered to be concluded at that time.

A cationic copolymer microemulsion was obtained that was translucent, able to be pumped and stable, as was proven by the fact that it did not separate into phases after centrifuging at 5000 rpm for 2 hours. The microemulsion maintained its stability and ability to be pumped at 0°C and at 40°C. The microemulsion was self-inverting.

The cationic copolymer microemulsions of Examples 25 and 26 were evaluated as sludge dehydration agents, determining the yields by using a sludge from the sludge digester of a drinking water treatment plant and the same method as in Examples 2 and 3, and they were compared to the commercial cationic emulsion Superfloc C-1596 by Cytec Technology Corp., Wilmington, DE. The optimal dose of the microemulsion of Example 25 was 270 ppm, and that of Example 26 was 280 ppm, in comparison to 290 ppm of the commercial cationic emulsion Superfloc C. The microemulsions of Examples 25 and 26 therefore had a higher yield than that of the commercial emulsion and without the drawbacks of the latter mentioned previously in this specification.

## Claims

1. A process for producing inverse microemulsions of a cationic copolymer constituted of a nonionic monomer and a cationic monomer, of high molecular weight, comprising the following steps:
a) preparing an aqueous phase, said aqueous phase comprising:
a.1) water;
a.2) a mixture of the monomers to be copolymerized comprising, at least, one nonionic monomer and one cationic monomer, at a total monomer concentration comprised between 20% and 45% by weight with regard to the total weight of the microemulsion, and at a nonionic monomer to cationic monomer ratio comprised between 99:1 and 20:80 by weight;
a.3) optionally, a metal chelating agent; and
a.4) optionally, a polymerization initiator;
by means of the mixture of components a.1), a.2) and, optionally, a.3) and/or a.4);
b) separately preparing an oily or organic phase, said oily phase comprising:
b.1) an organic solvent; and
b.2) a surfactant system whose HLB is comprised between 8,8 and 9,5, comprising at least two nonionic surfactants, (i) at least a nonionic surfactant "A" which has an HLB comprised between 3 and 8 and has at least one hydrophobic chain with at least one insaturation and number of carbon atoms equal to or greater than 18, and (ii) at least a nonionic surfactant "B" which has an HLB higher than 12 and comprising one or more saturated hydrophobic chains with a number of carbon atoms comprised between 8 and 18;
by means of the mixture of components b.1) and b.2);
c) degasifying said aqueous and oily phases, together or separately, with an inert gas until the oxygen concentration therein is lower than 0.5 ppm;
d) mixing said aqueous and oily phases in inert atmosphere in case they have been degasified separately; and
e) polymerizing said aqueous and oily phase mixture in inert atmosphere.

2. A process according to claim 1, wherein the nonionic surfactant "B" has an HLB higher than 13 and lower than 16.

3. A process according to claim 1, wherein the nonionic surfactant "B" comprises one or more saturated hydrophobic chains with a number of carbon atoms comprised between 8 and 14.

4. A process according to claim 1, wherein said surfactant system is at a concentration comprised between 5% and 15% by weight, preferably between 5% and 8% by weight, with regard to the total weight of the microemulsion.

5. A process according to claim 1, wherein said nonionic surfactant "B" is at a concentration comprised between 45% and 65%, preferably between 55% and 65%, by weight with regard to the total weight of the surfactant system.

6. A process according to any of claim 1, wherein said organic solvent is selected from an aliphatic hydrocarbon, an aromatic hydrocarbon and mixtures thereof, each component having a number of carbon atoms comprised between 6 and 18, preferably between 10 and 14.

7. A process according to claim 1, wherein said inert gas is nitrogen.

8. A process according to claim 1, wherein the aqueous phase pH is comprised between 3 and 6, preferably between 3 and 5.4.

9. A process according to claim 1, wherein said nonionic monomer is acrylamide.

10. A process according to claim 1, wherein said cationic monomer is chosen from the group formed by diallyldimethylammonium chloride, methacryloxyethyldimethylammonium chloride, (meth)acrylamidopropyltrimethylammonium chloride and acryloxyethyltrimethylammonium chloride.

11. A process according to claim 11, wherein the total monomer concentration is comprised between 20% and 45%, preferably between 30% and 40%, by weight with regard to the total weight of the microemulsion.

12. A process according to claim 1, wherein the polymerization temperature is comprised between 15°C and 40°C, preferably between 30°C and 40°C.

13. A process according to claim 1, wherein said polymerization initiator is selected from a redox pair or a thermal initiator.

14. A process according to claim 1, wherein the initiator is selected from sodium disulfite, 2,2'-azobisisobutyronitrile (AIBN), 2,2'-azobis(2-aminopropane) dihydrochloride (V-50), peroxides such as tert-butyl peroxide, sodium, potassium and ammonium persulfate and the sodium disulfite/ammonium persulfate, ammonium ferrous sulfate/ammonium persulfate redox pairs.

15. A process according to claim 1, wherein said aqueous phase does not contain a polymerization initiator (a.4), and polymerization is initiated by adding sodium disulfite in aqueous solution form to the degasified microemulsion for polymerizing the monomers.

16. A process according to claim 1, wherein said sodium disulfite aqueous solution is added continuously to the degasified microemulsion for polymerizing the monomers, and its concentration is comprised between 0.1 and 400 g/l, preferably between 0.1 and 5 g/l, and more preferably between 0.1 and 1 g/l, and its pH is comprised between 2 and the pH corresponding to the concentration of sodium disulfite used.

17. A process according to claim 1, comprising the following steps:
a) preparing an aqueous phase, said aqueous phase comprising:
a.1) water;
a.2) a mixture of, at least, one nonionic monomer and one cationic monomer, at a total monomer concentration comprised between 20% and 45% by weight with regard to the total weight of the microemulsion, and at a nonionic monomer to cationic monomer ratio comprised between 99:1 and 20:80 by weight; and,
a.3) optionally, a metal chelating agent; and,
a.4) optionally, an oxidizing agent component of a redox pair free radical polymerization initiator;
by means of the mixture of components a.1), a.2), and, optionally, a.3) and/or a.4);
b) separately preparing an oily phase, said oily phase comprising:
b.1) an organic solvent; and
b.2) a surfactant system whose HLB is comprised between 8,8 and 9,5, comprising at least two nonionic surfactants,(i) at least a nonionic surfactant "A" which has an HLB comprised between 3 and 8 and has at least one hydrophobic chain with at least one insaturation and number of carbon atoms equal to or greater than 18, and (ii) at least a nonionic surfactant "B" which has an HLB higher than 12 and comprising one or more saturated hydrophobic chains with a number of carbon atoms comprised between 8 and 18;
by means of the mixture of components b.1) and b.2);
c) degasifying said aqueous and oily phases, together or separately, with an inert gas until the oxygen concentration therein is lower than 0.5 ppm;
d) mixing said aqueous and oily phases in inert atmosphere in case they have been degasified separately; and
e) polymerizing said aqueous and oily phase mixture, in inert atmosphere, by means of adding sodium disulfite, in case said aqueous phase did not contain said oxidizing agent component of a redox pair free radical polymerization initiator (a.4), at a temperature comprised between 15°C and 40°C, preferably between 30°C and 40°C; or alternately
e') polymerizing said aqueous and oily phase mixture, in inert atmosphere, by adding a reducer agent capable of reducing said oxidizing agent component of a redox pair free radical polymerization initiator (a.4) present in said aqueous phase, at a temperature comprised between 15°C and 40°C, preferably between 30°C and 40°C.

18. A cationic copolymer in inverse microemulsion, obtainable according to the process of anyone of claims 1 to 17.

## Patentansprüche

1. Verfahren zur Gewinnung von inversen Mikroemulsionen eines hochmolekularen, aus einem nichtionischen Monomer und einem kationischen Monomer zusammengesetzten kationischen Copolymers, das die folgenden Schritte umfasst:
d) Vorbereitung einer wässrigen Phase, wobei die besagte wässrige Phase umfasst:
a.1) Wasser;
a.2) eine Mischung der zu copolymerisierenden Monomeren, die zumindest ein nichtionisches Monomer und ein kationisches Monomer umfasst, die in einer Gesamtmonomerkonzentration, die bezogen auf das Gesamtgewicht der Mikroemulsion zwischen 20 Gew.-% und 45 Gew.-% liegt, und in einem Gewichtsverhältnis des nichtionischen Monomers zum kationischen Monomer, das zwischen 99:1 und 20:80 liegt, enthalten ist;
a.3) gegebenenfalls, einen Metallchelatbildner; und
a.4) gegebenenfalls, einen Polymerisationsinitiator;
durch die Mischung der Komponenten a.1), a.2), und, gegebenenfalls, a.3) und/oder a.4);
d) getrennte Vorbereitung einer öligen oder organischen Phase, wobei die besagte ölige Phase umfasst:
b.1) ein organisches Lösungsmittel; und
b.2) ein oberflächenaktives System, dessen HLB-Wert zwischen 8,8 und 9,5 liegt, das zumindest zwei nichtionischen Tenside umfasst, wobei (i) zumindest ein nichtionisches Tensid "A", dessen HLB-Wert zwischen 3 und 8 liegt, zumindest eine hydrophobe Kette mit einer Anzahl Kohlenstoffatomen gleich oder höher als 18 und zumindest eine Doppelbindung aufweist, und wobei (ii) zumindest ein nichtionisches Tensid "B", dessen HLB-Wert höher als 12 ist, eine oder mehrere gesättigten hydrophoben Ketten mit einer Anzahl an Kohlenstoffatomen, die zwischen 8 und 18 liegt, aufweist;
durch die Mischung der Komponenten b.1) und b.2);
d) Gesamte oder individuelle Entgasung der besagten wässrigen und öligen Phasen mit einem Inertgas bis die Sauerstoffkonzentration in diesen Phasen geringer als 0,5 ppm ist;
d) Mischung der besagten wässrigen und öligen Phasen, wenn sie getrennt entgasen wurden, in einer inerten Atmosphäre; und
d) Polymerisation der besagten Mischung der wässrigen und öligen Phasen in einer inerten Atmosphäre.

2. Verfahren nach Anspruch 1, bei dem das nichtionische Tensid "B" einen HLB-Wert höher als 13 und geringer als 16 hat.

3. Verfahren nach Anspruch 1, bei dem das nichtionische Tensid "B" eine oder mehrere gesättigten hydrophoben Ketten mit einer Anzahl an Kohlenstoffatomen, die zwischen 8 und 14 liegt, umfasst.

4. Verfahren nach Anspruch 1, bei dem das besagte oberflächenaktives System in einer Konzentration liegt, die bezogen auf das Gesamtgewicht der Mikroemulsion zwischen 5 Gew.-% und 15 Gew.-%, vorzugsweise zwischen 5 Gew.-% und 8 Gew.-% liegt.

5. Verfahren nach Anspruch 1, bei dem das besagte nichtionische Tensid "B" in einer Konzentration liegt, die bezogen auf die Summe des oberflächenaktiven Systems zwischen 45 Gew.-% und 65 Gew.-%, vorzugsweise zwischen 55 Gew.-% und 65 Gew.-% liegt.

6. Verfahren nach Anspruch 1, bei dem das besagte organische Lösungsmittel unter einem aliphatischen Kohlenwasserstoff, einem aromatischen Kohlenwasserstoff und deren Mischungen ausgewählt ist, wobei jede Komponente eine Anzahl an Kohlenstoffatomen aufweist, die zwischen 6 und 18, vorzugsweise zwischen 10 und 14, liegt.

7. Verfahren nach Anspruch 1, bei dem das besagte Inertgas Stickstoff ist.

8. Verfahren nach Anspruch 1, bei dem der pH-Wert der wässrigen Phase zwischen 3 und 6, vorzugsweise zwischen 3 und 5,4 liegt.

9. Verfahren nach Anspruch 1, bei dem das besagte nichtionische Monomer Acrylamid ist.

10. Verfahren nach Anspruch 1, bei dem das besagte kationische Monomer aus der Gruppe bestehend aus Diallylmethylammoniumchlorid, Methacryloxyethyldimethylammoniumchlorid, (Meth)acrylamidopropyltrimethyl-ammoniumchlorid und Acryloxyethyltrimethylammoniumchlorid ausgewählt ist.

11. Verfahren nach Anspruch 1, bei dem die Monomergesamtkonzentration bezogen auf das Gesamtgewicht der Mikroemulsion zwischen 20 Gew.-% und 45 Gew.-%, vorzugsweise zwischen 30 Gew.-% und 40 Gew.-% liegt.

12. Verfahren nach Anspruch 1, bei dem die Polymerisationstemperatur zwischen 15°C und 40°C, vorzugsweise zwischen 30°C und 40°C liegt.

13. Verfahren nach Anspruch 1, bei dem der besagte Polymerisationsinitiator unter einem thermischen Initiator oder einem Redoxpaar ausgewählt ist.

14. Verfahren nach Anspruch 1, bei dem der besagte Initiator unter Natriumdisulfit, 2,2'-Azobisisobutyronitril (AIBN), 2,2'-Azobis(2-aminopropan)dihydrochlorid (V-50), Peroxide, wie tert-Butylperoxid, Natrium-, Kalium- und Ammoniumpersulfat, und die Redoxpaare Natriumdisulfit/Ammoniumpersulfat, Ammoniumeisen(II)-sulfat/Ammoniumpersulfat ausgewählt ist.

15. Verfahren nach Anspruch 1, bei dem die besagte wässrige Phase keinen Polymerisationsinitiator (a.4) enthält, und die Polymerisation durch Zusatz von Natriumdisulfit in Form einer wässrigen Lösung zu der zur Monomerpolymerisation entgaste Mikroemulsion ausgelöst wird.

16. Verfahren nach Anspruch 1, bei dem die wässrige Natriumdisulfitlösung zu der zur Monomerpolymerisation entgaste Mikroemulsion kontinuierlich zugesetzt wird und ihre Konzentration zwischen 0,1 und 400 g/l, vorzugsweise zwischen 0,1 und 5 g/l, und insbesondere zwischen 0,1 und 1 g/l liegt, und ihrer pH-Wert zwischen 2 und den der verwendeten Natriumdisulfitkonzentration liegt.

17. Verfahren nach Anspruch 1, das die folgenden Schritte umfasst:
e) Vorbereitung einer wässrigen Phase, wobei die besagte wässrige Phase umfasst:
a.1) Wasser;
a.2) eine Mischung von zumindest einem nichtionischen Monomer und einem kationischen Monomer, die bezogen auf das Gesamtgewicht der Mikroemulsion eine Gesamtmonomerkonzentration zwischen 20 Gew.-% und 45 Gew.-% und ein Gewichtsverhältnis nichtionisches Monomer zu kationisches Monomer zwischen 99:1 und 20:80 aufweist; und
a.3) gegebenenfalls, einen Metallchelatbildner; und
a.4) gegebenenfalls, ein Oxidationsmittel, das Bestandteil eines als Initiator der freie radikalische Polymerisation wirkenden Redoxpaares ist;
durch die Mischung der Komponenten a.1), a.2), und, gegebenenfalls, a.3) und/oder a.4);
e) getrennte Vorbereitung einer öligen Phase, wobei die besagte ölige Phase umfasst:
b.1) ein organisches Lösungsmittel; und
b.2) ein oberflächenaktives System, dessen HLB-Wert zwischen 8,8 und 9,5 liegt, das zumindest zwei nichtionischen Tenside umfasst, wobei (i) zumindest ein nichtionisches Tensid "A", dessen HLB-Wert zwischen 3 und 8 liegt, zumindest eine hydrophobe Kette mit einer Anzahl Kohlenstoffatomen gleich oder höher als 18 und zumindest eine Doppelbindung aufweist, und wobei (ii) zumindest ein nichtionisches Tensid "B", dessen HLB-Wert höher als 12 ist, eine oder mehrere gesättigten hydrophoben Ketten mit einer Anzahl an Kohlenstoffatomen, die zwischen 8 und 18 liegt, aufweist;
durch die Mischung der Komponenten b.1) und b.2);
d) Gesamte oder individuelle Entgasung der besagten wässrigen und öligen Phasen mit einem Inertgas bis die Sauerstoffkonzentration in diesen Phasen geringer als 0,5 ppm ist;
d) Mischung der besagten wässrigen und öligen Phasen, wenn sie getrennt entgasen wurden, in einer inerten Atmosphäre; und
e) Polymerisation der besagten Mischung der wässrigen und öligen Phasen in einer inerten Atmosphäre durch Zusatz von Natriumdisulfit, wenn die besagte ölige Phase das besagte Oxidationsmittel, das Bestandteil eines als Initiator der freie radikalische Polymerisation wirkenden Redoxpaares (a.4) ist, nicht enthält, bei einer Temperatur, die zwischen 15°C und 40°C, vorzugsweise zwischen 30°C und 40°C liegt; oder alternativ
e') Polymerisation der besagten Mischung aus wässrigen und öligen Phasen in einer inerten Atmosphäre durch Zusatz eines Reduktionsmittels, das fähig ist das besagte in der besagten wässrigen Phase vorhandenen Oxidationsmittel, das Bestandteil eines als Initiator der freie radikalische Polymerisation wirkenden Redoxpaares (a.4) ist, zu reduzieren, bei einer Temperatur zwischen 15°C und 40°C, vorzugsweise zwischen 30°C und 40°C.

18. Kationisches Copolymer in inverser Mikroemulsion, erhältlich nach dem Verfahren nach irgendeiner der Ansprüche 1 bis 17.

## Revendications

1. Procédé pour l'obtention de microémulsions inverses d'un copolymère cationique constitué d'un monomère non ionique et d'un monomère cationique, de poids moléculaire élevé, comprenant les étapes suivantes :
a) Préparer une phase aqueuse, comprenant ladite phase aqueuse:
a.1) de l'eau;
a.2) un mélange des monomères à copolymériser comprenant, au moins, un monomère non ionique et un monomère cationique, dans une concentration totale de monomères comprise entre 20% et 45% en poids par rapport au poids total de la microémulsion et dans un rapport en poids de monomère non ionique au monomère cationique compris entre 99:1 et 20:80;
a.3) optionnellement un chélateur de métaux; et
a.4) optionnellement, un initiateur de la polymérisation;
grâce au mélange des composants a.1), a.2), et, optionnellement, a.3) et/ou a.4);
b) Préparer, séparément, une phase huileuse ou organique, comprenant ladite phase huileuse :
b.1) un dissolvant organique; et
b.2) un système tensioactif dont la valeur de HLB est comprise entre 8,8 et 9,5, comprenant au moins deux tensioactifs non ioniques, (i) au moins un tensioactif non ionique "A" qui a une valeur de HLB comprise entre 3 et 8 et qui a, au moins, une chaîne hydrophobe contenant un nombre d'atomes de carbone égal ou supérieur à 18 et, au moins, une double liaison, et (ii) au moins, un tensioactif non ionique "B" qui a une valeur de HLB supérieure à 12 et qui comprend une ou plusieurs chaînes saturées, hydrophobes avec un nombre d'atomes de carbone compris entre 8 et 18;
grâce au mélange des composants b.1) et b.2);
c) Dégazer lesdites phases aqueuse et huileuse, ensembles ou séparément, avec un gaz inerte jusqu'à ce que la concentration d'oxygène dans les mêmes soit inférieure à 0, 5 ppm;
d) Mélanger lesdites phases aqueuse et huileuse, dans le cas où elles sont dégazées séparément, en atmosphère inerte; et
e) Polymériser ledit mélange des phases aqueuse et huileuse, en atmosphère inerte.

2. Procédé selon la revendication 1, dans lequel le tensioactif non ionique "B" a une valeur de HLB supérieure à 13 et inférieure à 16.

3. Procédé selon la revendication 1, dans lequel le tensioactif non ionique "B" comprend une ou plusieurs chaînes saturées hydrophobes avec un nombre d'atomes de carbone compris entre 8 et 14.

4. Procédé selon la revendication 1, dans lequel ledit système tensioactif est dans une concentration comprise entre 5% et 15% en poids, préférablement entre 5% et 8% en poids, par rapport au poids total de la microémulsion.

5. Procédé selon la revendication 1, dans lequel ledit tensioactif non ionique "B" est dans une concentration comprise entre 45% et 65%, préférablement entre 55% et 65% en poids, par rapport au total du système tensioactif.

6. Procédé selon la revendication 1, dans lequel ledit dissolvant organique est choisi parmi un hydrocarbure aliphatique, un hydrocarbure aromatique et leurs mélanges, ayant chaque composant un nombre d'atomes de carbone compris entre 6 et 18, préférablement entre 10 et 14.

7. Procédé selon la revendication 1, dans lequel ledit gaz inerte est du nitrogène.

8. Procédé selon la revendication 1, dans lequel la valeur du pH de la phase aqueuse est comprise entre 3 et 6, préférablement entre 3 et 5,4.

9. Procédé selon la revendication 1, dans lequel ledit monomère non ionique est de l'acrylamide.

10. Procédé selon la revendication 1, dans lequel ledit monomère cationique est choisi parmi le groupe formé par le chlorure de diallyldiméthylammonium, chlorure de métacryloxyethyldiméthylammonium, chlorure de (mét)acryl-amidopropyltriméthylammonium et chlorure de acryloxy-éthyltriméthylammonium.

11. Procédé selon la revendication 1, dans lequel la concentration totale de monomères est comprise entre 20% et 45%, préférablement entre 30% et 40%, en poids, par rapport au poids total de la microémulsion.

12. Procédé selon la revendication 1, dans lequel la température de polymérisation est comprise entre 15°C et 40°C, préférablement entre 30°C et 40°C.

13. Procédé selon la revendication 1, dans lequel ledit initiateur de la polymérisation est choisi parmi un initiateur thermique ou un couple redox.

14. Procédé selon la revendication 1, dans lequel ledit initiateur est choisi parmi disulfite de sodium, 2,2'-azobisisobutyronitrile (AIBN), dichlorhydrate de 2,2'-azobis(2-aminopropane) (v-50), peroxydes, tels que peroxyde de tert-butyle, persulfate de sodium, de potassium et d'ammonium, et les couples redox disulfite de sodium/persulfate d'ammonium, sulfate ferreux d'ammonium/persulfate d'ammonium.

15. Procédé selon la revendication 1, dans lequel ladite phase aqueuse ne contient pas d'initiateur de la polymérisation (a.4), et la polymérisation commence grâce à l'addition de disulfite de sodium, sous forme de dissolution aqueuse, sur la microémulsion dégazée pour polymériser les monomères.

16. Procédé selon la revendication 1, dans lequel la dissolution aqueuse de disulfite de sodium est additionnée en continu sur la microémulsion dégazée pour polymériser les monomères et sa concentration est comprise entre 0,1 et 400 g/l, préférablement entre 0,1 et 5 g/l, et plus préférablement entre 0,1 et 1 g/l, et la valeur de son pH est comprise entre 2 et la correspondante à la concentration de disulfite de sodium utilisée.

17. Procédé selon la revendication 1, comprenant les étapes suivantes :
a) Préparer une phase aqueuse, comprenant ladite phase aqueuse:
a.1) de l'eau;
a.2) un mélange de, au moins, un monomère non ionique et un monomère cationique, dans une concentration totale de monomères comprise entre 20% et 45% en poids par rapport au poids total de la microémulsion et dans un rapport en poids de monomère non ionique au monomère cationique compris entre 99:1 et 20:80; et
a.3) optionnellement un chélateur de métaux; et
a.4) optionnellement, un agent oxydant membre d'un couple redox initiateur de la polymérisation par radicaux libres;
grâce au mélange des composants a.1), a.2), et, optionnellement, a.3) et/ou a.4);
b) Préparer, séparément, une phase huileuse ou organique, comprenant ladite phase huileuse :
b.1) un dissolvant organique; et
b.2) un système tensioactif dont la valeur de HLB est comprise entre 8,8 et 9,5, comprenant au moins deux tensioactifs non ioniques, (i) au moins un tensioactif non ionique "A" qui a une valeur de HLB comprise entre 3 et 8 et qui a, au moins, une chaîne hydrophobe contenant un nombre d'atomes de carbone égal ou supérieur à 18 et, au moins, une double liaison, et (ii) au moins, un tensioactif non ionique "B" qui a une valeur de HLB supérieure à 12 et qui comprend une ou plusieurs chaînes saturées, hydrophobes avec un nombre d'atomes de carbone compris entre 8 et 18;
grâce au mélange des composants b.1) et b.2);
c) Dégazer lesdites phases aqueuse et huileuse, ensembles ou séparément, avec un gaz inerte jusqu'à ce que la concentration d'oxygène dans les mêmes soit inférieure à 0,5 ppm;
d) Mélanger lesdites phases aqueuse et huileuse, dans le cas où elles sont dégazées séparément, en atmosphère inerte; et
e) Polymériser ledit mélange des phases aqueuse et huileuse, en atmosphère inerte, par addition de disulfite de sodium, dans le cas où ladite phase aqueuse ne contient pas ledit agent oxidant membre d'un couple redox initiateur de la polymérisation par radicaux libres (a.4), à une température comprise entre 15°C et 40°C, préférablement entre 30°C et 40°C; ou alternativement
e') Polymériser ledit mélange des phases aqueuse et huileuse, en atmosphère inerte, par addition d'un agent réducteur capable de réduire ledit agent oxydant membre d'un couple redox initiateur de la polymérisation par radicaux libres (a.4) présent dans ladite phase aqueuse, à une température comprise entre 15°C et 40°C, préférablement entre 30°C et 40°C.

18. Copolymère cationique en microémulsion inverse pouvant être obtenu selon le procédé de n'importe laquelle des revendications 1 à 17.
